# EUROPEAN PATENT SPECIFICATION

(11) **EP 1 039 770 B1**
(45) Date of publication and mention of the grant of the patent: **11.05.2011**
(21) Application number: 99105897.5
(22) Date of filing: 24.03.1999
(51) Int. Cl.: H04M 1/66, H04M 1/72, H04W 12/06

(54) **A method and apparatus for getting access to a mobile communication apparatus, particularly digital mobile phone**
Verfahren und Vorrichtung zum Zugriff auf ein mobiles Kommunikationsgerät, insbesondere ein digitales Mobiltelefon
Méthode et appareil pour accéder un appareil à communication mobile, en particulier un téléphone de mobile digitale

(43) Date of publication of application: 27.09.2000
(73) Proprietor: Hewlett-Packard Development Company, L.P., Houston, TX 77707 (US)
(72) Inventor: Pedersen, Jens Erik, DK - 9000 Aalborg, (DK)
(74) Representative: W.P. Thompson & Co.

(56) References cited:
- WO-A1-98/16906
- GB-A- 2 148 569
- US-A- 4 993 068
- M. Lapère, E. Johnson: "User Authentification in mobile Telecommunication Environments using Voice Biometrics and Smartcards" Proceedings of: Technology for Cooperative Competition. 4th Int. Conf. on Intelligence in Services and Networks. Cernobbio, Italy, 27-29 May 97 XP002106691

## Description

### BACKGROUND OF THE INVENTION

The present invention relates to a method and apparatus for getting access to a mobile communication apparatus, particularly a digital mobile phone.

Although applicable to any mobile communication system, the present invention and its underlying problems will be discussed with particular reference to GSM mobile phone systems.

M. Lapère, E. Johnson: "User Authentication in mobile Telecommunication Environments using Voice Biometrics and Smartcards" Proceedings of: Technology for Cooperative Competition. 4th Int. Conf. on Intelligence in Services and Networks. Cernobbio, Italy, 27-29 May 97 relates to a method of biometric authentication for mobile communication systems.

In current GSM mobile phones, a PIN (Personal Identification) code can be used for getting access to the SIM (Subscriber Identification Module) card and thereby to the network. This helps to protect against unauthorized use of the mobile phones.

In general, a user does not like to have the same code for his or her mobile phone as used f.e. for credit cards, alarms or other secured systems. This is due to the fact that, if an unauthorized person sees the code being entered, he or she will have access to every secured system. Thus, a disadvantage arises from the necessity to have a variety of different PIN codes for different secured systems. Moreover, as mobiles are steadily decreasing in size, future models will not necessarily have a keypad.

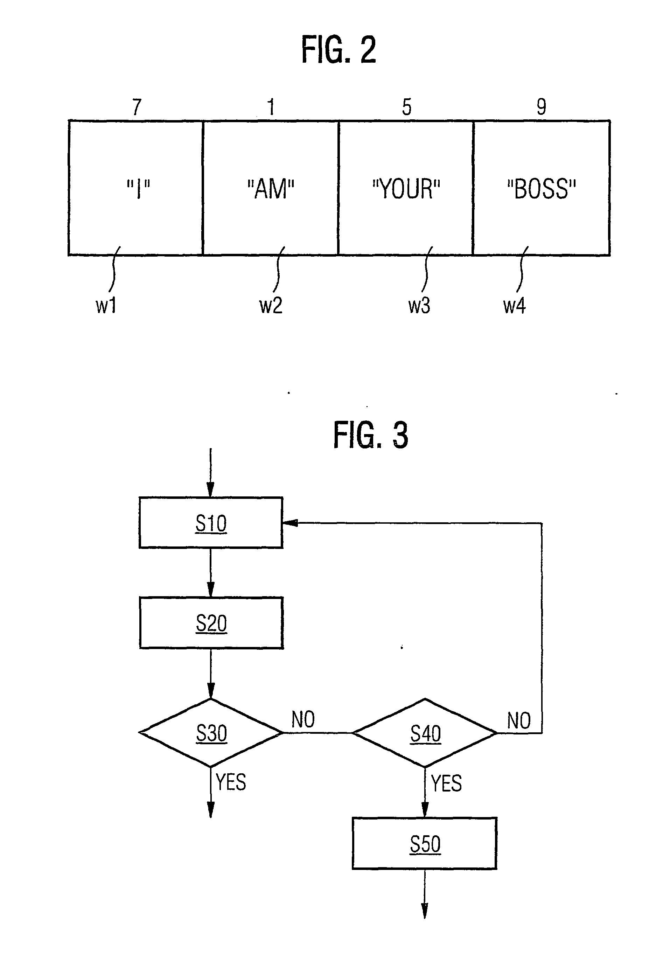

Fig. 3 shows a flowchart for illustrating the usual procedure for getting access to a GSM mobile phone. A description of the current function of the PIN code may be found in GSM specification 11.11 (6.0.0). Section 8.9 specifically contains the procedure for entering the PIN code.

In step S10, the user is asked to enter his or her PIN code by showing a corresponding display message. Then, the user pushes four keys in order to enter the code. In step S20, the PIN code is sent to the SIM card, f.e. by pressing the OK button. In step S30, the entered PIN code is compared to a corresponding code stored in the SIM card. If both codes match, access is confirmed. If there is a mismatch, in step S40 it is determined, if the number of tries equals a predetermined number, f.e. 3. If this is the case, the access is denied and the user is asked to enter his or her PUK code. If the number of tries is less than the predetermined number in step S40, the user is allowed to go back to step S10 and asked again to enter his or her correct PIN code.

### SUMMARY OF THE INVENTION

The present invention provides a method and apparatus for getting access to a mobile communication apparatus, particularly a digital mobile phone, according to claim 1 and 4, respectively.

A particular advantage is that no more new code has to be remembered by the user. Instead of keying in a PIN code, the user simply enters his or her speech over the microphone, f.e. a specific phrase or expression which was trained to the system in advance. By using speaker recognition (verification), it not only the word, but also the speaker who pronounciates the word, is recognised.

In addition, it does not matter if a bypasser can identify the entered speech or not, because another person will not be able to reproduce it as it would be possible with a PIN code.

The principal idea of the present invention is to apply the speech recognition technique for getting access to a mobile communication apparatus, particularly digital mobile phone. When the speech has been correctly validated, the mobile phone will be unlocked. In this respect, speech is not restricted to the personal name, but can be any spoken text and/or number string.

At the same time, the speech recognition could advantageously be used for enabling other secure parts of the device, i.e. calendar, email, and general personal information or settings.

Preferred embodiments of the present invention are listed in the dependent claims.

According to a preferred embodiment there is provided a method for getting access to a mobile communication apparatus, particularly a digital mobile phone, comprising the steps of: entering a speech string in a speech recognition means having a stored reference speech string or parameters representing the speech string; comparing the entered speech string and the stored reference speech string or the parameters representing the speech string; if there is a match between the entered speech string and the stored speech string or parameters representing the speech string a stored PIN code is read from a memory and input in the SIM card; comparing the PIN code with a reference code stored in the SIM card and if there is a match, confirming the access; or if there is a mismatch, denying the access.

According to a further preferred embodiment there is provided an apparatus for getting access to a mobile communication apparatus, particularly a digital mobile phone, comprising: a speech recognition means having a stored reference speech string or parameters representing the speech string; an entering means for entering a speech string; a comparing means for comparing the entered speech string and the stored reference speech string or the parameters representing the speech string; means for reading a PIN code from memory to a SIM card if there is a match between the entered speech string or parameters representing the speech string; and an access means for confirming the access, if there is a match, and for denying the access, if there is a mismatch; a comparison means for comparing the PIN code with a reference code stored in the SIM card.

According to a further preferred embodiment, said speech string has a plurality of words each being associated with with a corresponding digit of a PIN code, and there are a conversion means for converting each matched word to a respective digit of a PIN code; and an entering means for entering said PIN code to a SIM card.

### BRIEF DESCRIPTION OF THE DRAWINGS

The present invention will become more fully understood by the following detailed description of preferred embodiments thereof in conjunction with the accompanying drawings, in which:
- Fig. 1: a flowchart for illustrating the procedure for getting access to a GSM mobile phone according to an embodiment of the invention;
- Fig. 2: a schematic illustration for explaining an embo- diment of the speech recognition method; and
- Fig. 3: a flowchart for illustrating the usual procedure for getting access to a GSM mobile phone.

### DESCRIPTION OF THE PREFERRED EMBODIMENTS

In the figures, the same reference signs denote the same or equivalent parts.

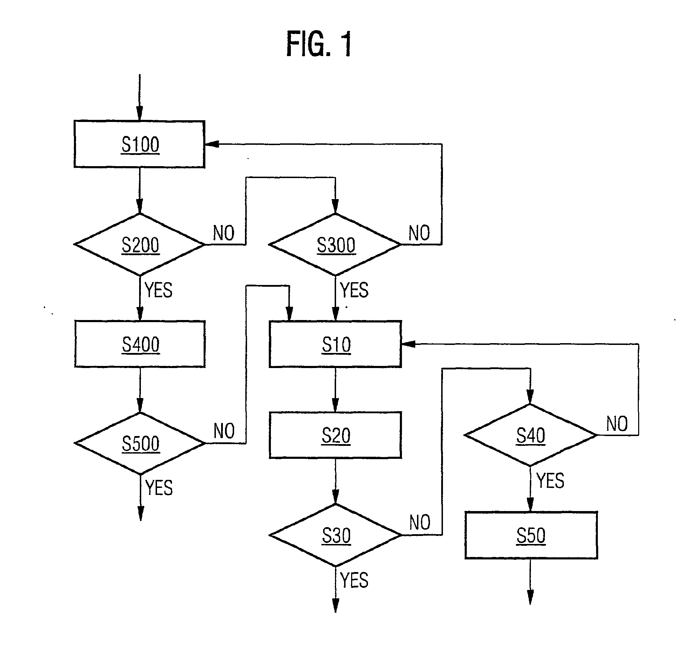

Fig. 1 shows a flowchart for illustrating the procedure for getting access to a GSM mobile phone according to an embodiment of the invention.

In step S100, the user is asked to enter his or her speech string by voice in the speaker or by showing a corresponding display message. Then, the user speakes the speech string in a microphone belonging to the mobile phone. A headset could also be used.

In step S200, it is checked if the speech string is correct. This may be done by a usual speech pattern comparison technique, where a trained reference speech string is compared with the input speech string or parameters representing the speech string (LPC, ceptral coefficient, ...).

If the speech is not correct, in step S300 it is determined, if the number of tries equals a predetermined number, f.e. 3. If the number of tries is less than the predetermined number in step S300, the user is allowed to go back to step S100 and asked again to enter his or her correct speech string. If the number of tries equals the prde-termined number, the procedure proceeds to step S10 ff. explained above.

If the speech is correct in step S200, it is internally converted to a PIN code and the PIN code is sent to the SIM card. The conversion may be obtained by reading specific memory locations or by a more sophisticated conversion alogorithm.

In step S500, the entered PIN code is compared to a corresponding code stored in the SIM card. If both codes match, access is confirmed. If there is a mismatch, the procedure proceeds to step S10 ff. explained above.

In other words, if the speech recognition and conversion procedure fails for any reason, the usual procedure for getting access to a GSM mobile phone is performed, namely steps S10 to S50 explained with respect to Fig. 3.

Fig. 2 is a schematic illustration for explaining an embodiment of the speech recognition method.

As shown in Fig. 2, the speech string entered by the user in a microphone is split into four words wl-w4, each of which represents a 1-digit value, respectively, such that all words in combination represent the four-digit code, here "7159", if the entered speech string corresponds to a stored reference speech string "I AM YOUR BOSS".

If the comparison of the words of the speech string results in matches with the corresponding reference words, then for each word a stored digit of the PIN number is read from a memory and input in the SIM card.

The individual squares can also contain spoken numbers instead of words.

Although the present invention has been described with respect to preferred embodiments thereof, it should be understood that many modifications can be performed without departing from the scope of the invention as defined by the appended claims.

The access procedure can be more complex with additional queries, such as birth date, additional codes etc.

The access procedure can of course be applied to other mobile communication apparatus, such as automobile radios.

In case of receive only apparatus such as automobile radios it can even replace the usual access card at all.

## Claims

1. A method for getting access to a mobile communication apparatus, particularly a digital mobile phone, comprising the steps of:
entering a speech string (S100) in a speech recognition means having a stored reference speech string or parameters representing the speech string;
comparing (S200) the entered speech string and the stored reference speech string or the parameters representing the speech string;
if there is a match between the entered speech string and the stored speech string or parameters representing the speech string a stored PIN code is read from a memory and input in the SIM card;
comparing (S500) the PIN code with a reference code stored in the SIM card and if there is a match, confirming the access; or if there is a mismatch, denying the access.

2. The method according to claim 1, comprising the steps of:
performing a PIN code access procedure, if the speech recognition and/or match between the entered speech string and reference speech string fails.

3. An apparatus for getting access to a mobile communication apparatus, particularly a digital mobile phone, comprising:
a speech recognition means having a stored reference speech string or parameters representing the speech string;
an entering means for entering a speech string;
a comparing means for comparing the entered speech string and the stored reference speech string or the parameters representing the speech string;
means for reading a PIN code from memory to a SIM card if there is a match between the entered speech string or parameters representing the speech string; and an access means for confirming the access, if there is a match, and for denying the access, if there is a mismatch;
a comparison means for comparing the PIN code with a reference code stored in the SIM card.

4. The apparatus according to claim 3, wherein said speech string has a plurality of words (wl-w4) each being associated with a corresponding digit of a PIN code; and having a conversion means for converting each matched word to a respective digit of said PIN code; and an entering means for entering said PIN code to a SIM card.

## Patentansprüche

1. Verfahren zum Gewinnen von Zugang zu einem mobilen Kammunikationsgerät, insbesondere einem digitalen Mobiltelefon, das die folgenden Schritte beinhaltet:
Eingeben einer Sprachlautfolge (S100) in ein Spracherkennungsmittel mit einer gespeicherten Referenzsprachlautfolge oder die Sprachlautfolge repräsentierenden Parametern;
Vergleichen (S200) der eingegebenen Sprachlautfolge mit der gespeicherten Referenzsprachlautfolge oder den die Sprachlautfolge repräsentierenden Parametern;
Lesen, im Falle einer Übereinstimmung zwischen der eingegebenen Sprachlautfolge und der gespeicherten Sprachlautfolge oder den die Sprachlautfolge repräsentierenden Parametern, eines gespeicherten PIN-Codes aus einem Speicher und Eingeben derselben in die SIM-Karte;
Vergleichen (S500) des PIN-Code mit einem in der SIM-Karte gespeicherten Referenzcode und Bestätigen des Zugangs im Falle einer Übereinstimmung oder Verweigern des Zugangs im Falle einer Fehlübereinstimmung.

2. Verfahren nach Anspruch 1, das die folgenden Schritte beinhaltet:
Ausführen eines PIN-Code-Zugriffsvorgangs, wenn die Spracherkennung und/oder Übereinstimmung zwischen der eingegebenen Sprachlautfolge und der Referenzsprachlautfolge erfolglos verläuft.

3. Gerät zum Gewinnen von Zugang zu einem mobilen Kommunikationsgerät, insbesondere einem digitalen Mobiltelefon, das Folgendes umfasst:
ein Spracherkennungsmittel mit einer gespeicherten Referenzsprachlautfolge oder die Sprachlautfolge repräsentierenden Parametern;
ein Eingabemittel zum Eingeben einer Sprachlautfolge;
ein Vergleichsmittel zum Vergleichen der eingegebenen Sprachlautfolge mit der gespeicherten Referenzsprachlautfolge oder den die Sprachlautfolge repräsentierenden Parametern;
Mittel zum Lesen eines PIN-Code aus dem Speicher auf eine SIM-Karte im Falle einer Übereinstimmung zwischen der eingegebenen Sprachlautfolge oder die Sprachlautfolge repräsentierenden Parametern; und ein Zugangsmittel zum Gewähren des Zugangs im Falle einer Übereinstimmung und zum Verweigern des Zugangs im Falle einer Fehlübereinstimmung;
ein Vergleichsmittel zum Vergleichen des PIN-Codes mit einem in der SIM-Karte gespeicherten Referenzcode.

4. Gerät nach Anspruch 3, wobei die genannte Sprachlautfolge eine Mehrzahl von Wörtern (w1-w4) hat, die jeweils mit einer entsprechenden Stelle eines PIN-Code assoziiert sind; und mit einem Wandlungsmittel zum Umwandeln jedes übereinstimmenden Wortes in eine jeweilige Stelle des genannten PIN-Code; und ein Eingabemittel zum Eingeben des genannten PIN-Code in eine SIM-Karte.

## Revendications

1. Un procédé d'obtention d'un accès à un appareil de communication mobile, plus particulièrement un téléphone mobile numérique, comprenant les opérations suivantes :
l'entrée d'une chaîne vocale (S100) dans un moyen de reconnaissance vocale possédant une chaîne vocale de référence conservée en mémoire ou des paramètres représentant la chaîne vocale,
la comparaison (S200) de la chaîne vocale entrée à la chaîne vocale de référence conservée en mémoire ou aux paramètres représentant la chaîne vocale,
s'il y a une correspondance entre la chaîne vocale entrée et la chaîne vocale conservée en mémoire ou les paramètres représentant la chaîne vocale, un code PIN conservé en mémoire est lu à partir d'une mémoire et est saisi dans la carte SIM,
la comparaison (S500) du code PIN à un code de référence conservé en mémoire dans la carte SIM et s'il y a une correspondance, la confirmation de l'accès, ou s'il n'y a pas de correspondance, le refus de l'accès.

2. Le procédé selon la Revendication 1, comprenant les opérations suivantes :
l'exécution d'une procédure d'accès à un code PIN, si la reconnaissance vocale et/ou la correspondance entre la chaîne vocale entrée et la chaîne vocale de référence échoue.

3. Un appareil d'obtention d'un accès à un appareil de communication mobile, plus particulièrement un téléphone mobile numérique, comprenant:
un moyen de reconnaissance vocale possédant une chaîne vocale de référence conservée en mémoire ou des paramètres représentant la chaîne vocale,
un moyen d'entrée destiné à entrer une chaîne vocale,
un moyen de comparaison destiné à comparer la chaîne vocale entrée à la chaîne vocale de référence conservée en mémoire ou aux paramètres représentant la chaîne vocale,
un moyen de lire un code PIN de la mémoire à une carte SIM s'il y a une correspondance entre la chaîne vocale entrée ou les paramètres représentant la chaîne vocale, et un moyen d'accès destiné à confirmer l'accès s'il y a une correspondance, ou
à refuser l'accès s'il n'y a pas de correspondance,
un moyen de comparaison destiné à comparer le code PIN à un code de référence conservé en mémoire dans la carte SIM.

4. L'appareil selon la Revendication 3, où ladite chaîne vocale possède une pluralité de mots (wl-w4), chaque mot étant associé à un chiffre correspondant d'un code PIN, et possédant un moyen de conversion destiné à convertir chaque mot concordant en un chiffre respectif dudit code PIN, et un moyen d'entrée destiné à entrer ledit code PIN dans une carte SIM.
